# EUROPEAN PATENT APPLICATION

(11) **EP 1 729 506 A2**
(43) Date of publication of application: **06.12.2006**
(21) Application number: 06008869.7
(22) Date of filing: 28.04.2006
(51) Int. Cl.: H04N 5/21

(54) **Slicing device for extracting multiplexed data**

(30) Priority: 31.05.2005 JP 2005159470
(71) Applicant: KABUSHIKI KAISHA TOSHIBA, Tokyo 105-8001 (JP)
(72) Inventor: Matsubara, Shogo c/o IPD, Minato-ku Tokyo 105-8001 (JP)
(74) Representative: HOFFMANN EITLE

(57) **Abstract**

A slicing device prevents influence of a ghost signal and a pseudo ghost signal from appearing in an output. In an equalizing device having a transversal filter (16) and a slicer (17) to which a digital video signal after ghost-canceling through the transversal filter is input, a ghost determining unit (21) determines whether the ghost signal has a positive polarity or negative polarity by using tap gain control information used in the transversal filter. When the ghost signal has the negative polarity, a threshold level control unit (22) controls the slicer so as to increase the slice level of the slicer to suppress output of the pseudo ghost signal.

## Description

One embodiment of the invention relates to a slicing device for extracting multiplexed data, which is designed to prevent the influence of a ghost signal and a pseudo ghost signal from appearing in the output of the slicing device.

A digital television receiver involves a period in which text broadcast data is multiplexed on a specific horizontal line during a vertical blanking period. A signal multiplexed in this period is referred to as a character multiplexed signal. For the purpose of extraction of the text broadcast data, the television receiver inputs digital data in a character multiplex period to a slicer to acquire digitized data from the output of the slicer (refer to, for example, Jpn. Pat. Appln. KOKAI Publication No. 2004-088623). The television receiver also employs a technique to reduce the influence of the ghost signal or noise, etc., as a technique to extract the text broadcast data (refer to, for example, Jpn. Pat. Appln. KOKAI Publication No. 08-032026). This technique detects an error in the extracted text broadcast data, and when an error rate becomes larger, supplies information on the error rate to a slice level control circuit. The level control circuit controls a slice level of a slicing circuit to slice the text broadcast data.

To input a digital video signal to a transversal filter and to cancel the ghost signal, it is necessary for the television receiver to supply tap gain control data to the filter.

Here, a problem such that occurs when a video signal is processed in a state in which it is ITU-R BT. 601-converted into a digital signal is presented (wherein, ITU-R BT. 601 is a international standard defining a data format in converting an analog video signal into digital data). That is to say, when the ghost signal is detected to have a positive polarity, ghost cancel data of a negative polarity is generated to add it to original digital video data and the ghost signal is reduced. However, when the ghost signal is detected to have a negative polarity, the digital video data cannot properly express the ghost signal of the negative polarity having a level lower than a clamp level. On the other hand, to cancel the ghost signal of the negative polarity, generating the ghost cancel data of the positive polarity and adding it to the original digital video data in which the ghost signal seems to be present causes a defect of multiplexing the ghost signal of the positive polarity on the contrary.

According to one embodiment of the invention, a slicing device and a method for extracting multiplexed data designed to prevent influence of a ghost signal and a pseudo ghost signal from appearing in an output.

In order to attain the above object, in the embodiment of the invention, a slicing method of an equalizing device includes a clamp level conversion processing unit to which a digital video signal is input; a transversal filter to which the digital video signal of which the clamp level is set by the level conversion processing unit is input; a slicing circuit to which the digital video signal after being ghost-cancelled by the filter is input; and a control unit. And the slicing method is characterized in that determines whether the ghost signal has a positive polarity or a negative polarity by using tap gain control information used in the filter, and controls so as to relatively increase the slice level of the slicing circuit when the ghost signal has the negative polarity.

More specifically, when the ghost signal has the negative polarity, the slicing method controls the slice level at the slicing circuit so as to be decreased.

In another embodiment of the invention, specifically, when the ghost signal has the negative polarity, the slicing method controls the clamp level at the clamp level conversion processing unit so as to be decreased.

According to the above-mentioned method, the slice level is controlled to an appropriate level and a digitized output with reduced ghosting and noise can be obtained.

This summary of the invention does not necessarily describe all necessary features so that the invention may also be a sub-combination of these described features.

The invention can be more fully understood from the following detailed description when taken in conjunction with the accompanying drawings, in which:
FIG. 1 is an exemplary configuration explanatory view showing an embodiment of the invention;
FIG. 2 is an exemplary explanatory view of a digital video signal transmitted thorough a teletext broadcast;
FIG. 3A is an exemplary signal waveform chart shown for explaining a cancel operation of a ghost signal;
FIG. 3B is an exemplary signal waveform chart shown for explaining the cancel operation of the ghost signal;
FIG. 3C is an exemplary signal waveform chart shown for explaining the cancel operation of the ghost signal;
FIG. 4A is an exemplary explanatory view showing an example in the case of there occurring an unnecessary ghost signal in a cancel operation of a ghost signal;
FIG. 4B is an exemplary explanatory view showing an example in the case of there occurring the unnecessary ghost signal in the cancel operation of the ghost signal;
FIG. 4C is an exemplary explanatory view showing an example in the case of there occurring the unnecessary ghost signal in the cancel operation of the ghost signal;
FIG. 5A is an exemplary signal waveform chart shown for explaining an operation when a ghost signal is canceled in an embodiment of the invention;
FIG. 5B is an exemplary signal waveform chart shown for explaining the operation when the ghost signal is canceled in the embodiment of the invention;
FIG. 5C is an exemplary signal waveform chart shown for explaining the operation when the ghost signal is canceled in the embodiment of the invention;
FIG. 5D is an exemplary signal waveform chart shown for explaining the operation when the ghost signal is canceled in the embodiment of the invention;
FIG. 6 is an exemplary configuration explanatory view showing another embodiment of the invention;
FIG. 7A is an exemplary signal waveform chart shown for explaining an operation when a ghost signal is canceled in a device in FIG. 6;
FIG. 7B is an exemplary signal waveform chart shown for explaining the operation when the ghost signal is canceled in the device in FIG. 6;
FIG. 7C is an exemplary signal waveform chart shown for explaining the operation when the ghost signal is canceled in the device in FIG. 6;
FIG. 7D is an exemplary signal waveform chart shown for explaining the operation when the ghost signal is canceled in the device in FIG. 6;
FIG. 7E is an exemplary signal waveform chart shown for explaining the operation when the ghost signal is canceled in the device in FIG. 6;
FIG. 8 is an exemplary flowchart showing the operation of the device shown in FIG. 1;
FIG. 9 is an exemplary flowchart showing the operation of the device shown in FIG. 6;
FIG. 10 is an exemplary explanatory view showing a bit error rate of an output when a video signal with a ghost signal generated therein is passed through a waveform equalizer (transversal filter);
FIG. 11 is an exemplary explanatory view showing a bit error rate of an output of a video signal in a state where an unnecessary ghost signal is suppressed by the device shown in FIG. 1; and
FIG. 12 is an exemplary explanatory view showing a bit error rate of an output of a video signal in a state where an unnecessary ghost signal is suppressed by the device shown in FIG. 6.

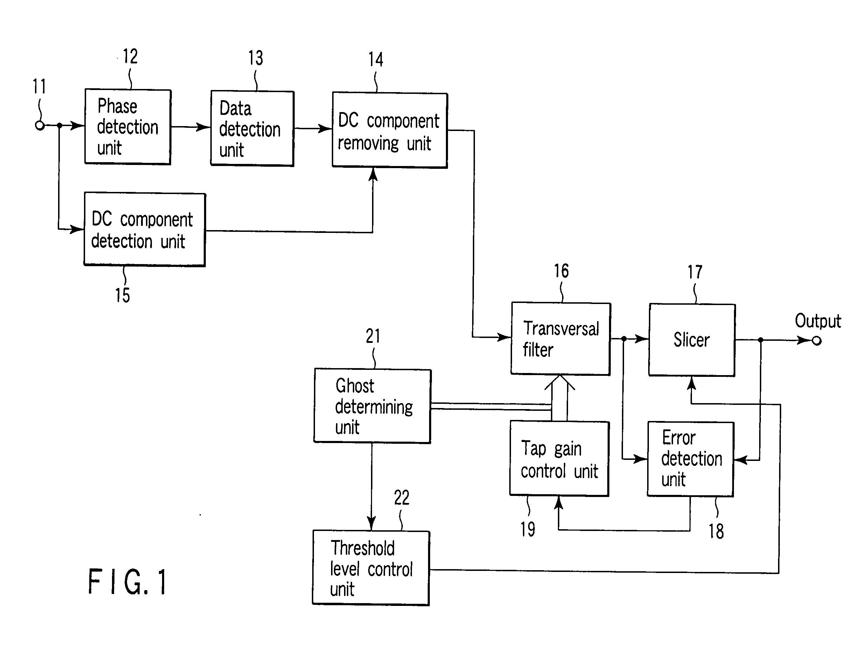

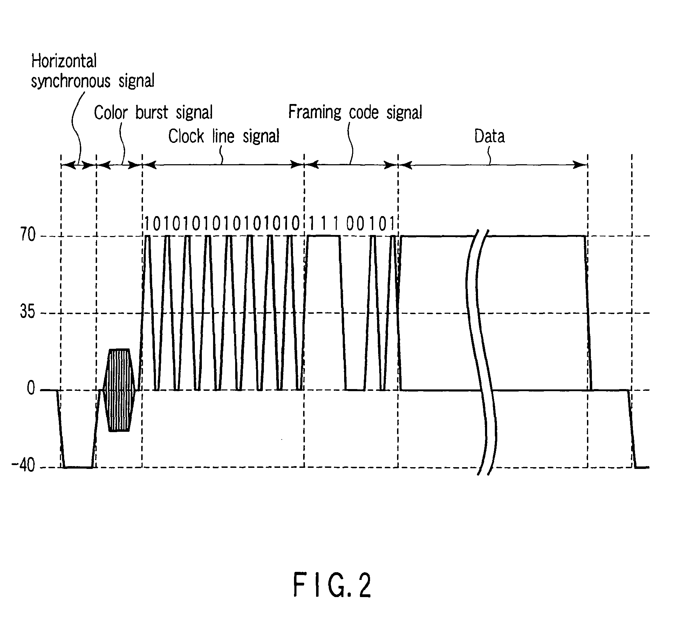

Hereinafter, embodiments of the invention will be described with reference to the drawings. In FIG. 1, a digital video signal is input to an input terminal 11. The video signal is input to a phase detection unit 12 and a direct current (DC) component detection unit 15. The phase detection unit 12 refers a clock line signal serving as a reference phase. The clock line signal is multiplexed during a prescribed period on a horizontal line with character data of the video signal multiplexed thereon (refer to FIG. 2).

The phase detection unit 12 generates a sampling pulse phase-locked with the clock line signal. For example, the clock line signal is used as a reference signal of a phase-locked loop (PLL) circuit. The PLL circuit comprises a voltage control oscillator, a phase comparator, a low-pass filter and a frequency divider. The phase comparator compares the phase of the clock line signal with that of a comparison signal generated internally to output its phase shift amounts. The phase shift amounts are supplied to an oscillation phase control terminal of the voltage control oscillator through the low-pass filter. The frequency divider divides the output from the voltage controlled oscillator and converts it into an appropriate frequency to utilize it as a sampling pulse, and also converts it into an appropriate frequency to utilize it as the aforementioned reference signal.

A data detection unit 13 samples values of digital video data at timing of the sampling pulse. The sampled data is input to the next DC component elimination unit 14 to be eliminated its DC components. The amount eliminating the DC components is controlled by an output from the DC component detection unit 15.

The output data from the elimination unit 14 is input to a transversal filter 16. The filter 16 cancels a ghost signal on the basis of tap gain information from a tap gain control unit 19. The video signal of which the ghost signal cancelled is input to a slicer 17 to be sliced and converted into digital data to be output.

Data on an input side and an output side of the slicer 17 is input to an error detection unit 18. The error detection unit 18 detects a residual ghost signal. To detect the residual ghost signal, a correlative arithmetic processing using a signal before ghost canceling and a signal after ghost canceling is performed during a period appropriate to detect a ghost. The correlative arithmetic processing detects a time difference between the reference signal and the residual ghost signal and detects amplitude (and its positive polarity or negative polarity).

The detection information of the residual ghost signal is fed back to the tap gain control unit 19. The gain control unit 19 controls a tap gain to be controlled of the filter 16. Thereby, the amplitude and the time difference of the ghost cancel signal are determined. With the ghost cancel signal added to an original video signal on the input side of the filter 16, the slicing device in the embodiment can obtain a video signal in which the ghost signal is cancelled.

Now referring to FIG. 2, a character multiplexed section of the digital video signal will be described. As shown in FIG. 2, in the case of a teletext broadcast signal, a character signal is multiplexed in a specified horizontal period during a vertical flyback period. In this case, the character multiplexed section includes a horizontal synchronous signal, a color burst signal, a clock line signal, a framing code and character data in this order. The oscillator of the phase detection unit 12 phase-locked with the clock line signal to generate a data sampling pulse. The framing code is a code serving as a reference to indicate a start of a multiplexed position of data.

The clock line signal and the framing code are expressed by '1' and '0' as digital data; however, presented as digital data of values of 0 to 50 in a state in which the clock line signal and the framing code are multiplexed on the digital video signal. Hence, a maximum value 50 ideally expresses '1' of the digital data and a DC level value 0 ideally expresses '0' of the digital data. In the case of the shift of the sampling phase, the maximum value 50 becomes, for example, 45 or 40 sometimes, and the DC level value 0 varies to, for example, a value 5 or value 10.

Referring again to FIG. 1, tap gain control information from the tap gain control unit 19 is input to a ghost determining unit 21. The determining unit 21 determines whether the ghost signal has a positive polarity or a negative polarity by using the gain control information. In other words, the determining unit 21 determines whether the filter 16 intends to cancel a ghost of a negative polarity or a ghost of a positive polarity. If the ghost signal has the negative polarity, the gain control unit 19 controls a slicer 17 in order to increase a slice level. The reason of the above control will be described in detail below.

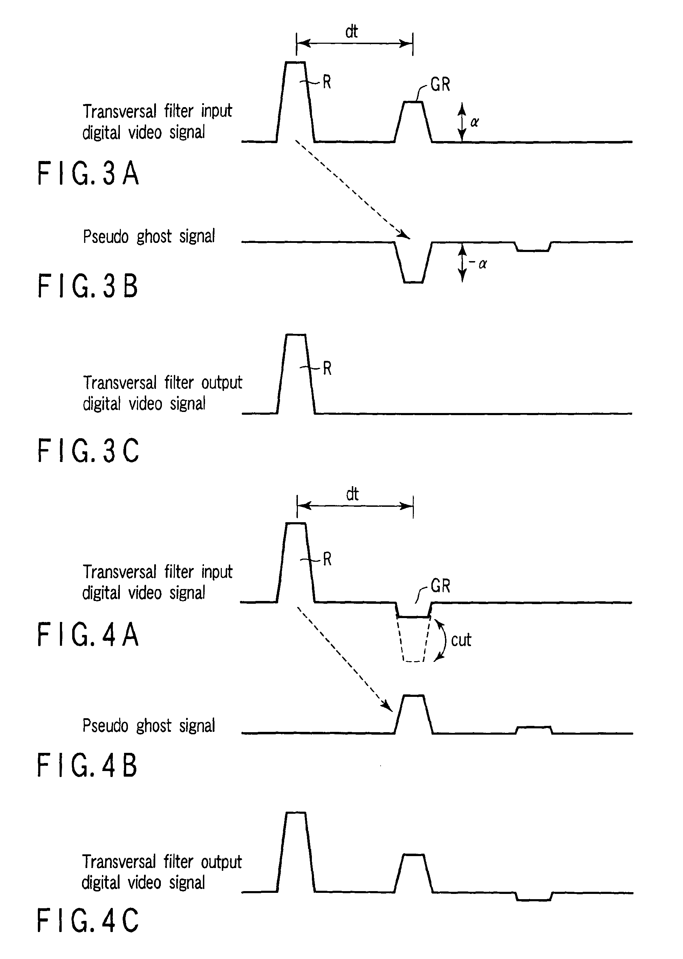

FIGS. 3A-3C and FIGS. 4A-4C are views for explaining cancel operations of the ghost signals, FIGS. 3A-3C are principle views in the case of canceling the ghost signals of positive polarities and FIGS. 4A-4C are principle views in the case of canceling the ghost signals of negative polarities. FIG. 3A shows a state where a ghost has been added to the digital video signal input to the filter 16. It is presumed that a ghost signal GR of a reference signal R occurs at a position delaying a time dt from the reference signal R. Amplitude of the ghost signal GR is assumed to be α. In contrast, the tap gain control unit 19 controls the tap gain of the filter 16 so as to generate a pseudo ghost as shown in FIG. 3B. That is, the gain control unit 19 generates the pseudo ghost signal of the amplitude α at the position delaying the time dt from the reference signal R. With the pseudo ghost signal added to the digital video signal on the input side enables obtaining an output video signal of which the ghost signal is canceled, as shown in FIG. 3C.

Successively, FIG. 4A shows an example of the case in which a ghost signal of a negative polarity has occurred. Here, the input ghost signal of the negative polarity cannot be reproduced by an expression ability of a signal ITU-R BT. 601-converted.

However, in contrast, the gain control unit 19 controls the tap gain from the filter 16 in order to generate such a pseudo ghost signal shown in FIG. 4B. That is, the gain control unit 19 generates the pseudo ghost signal of the amplitude α at the position delaying the time td from the reference signal R to make it as the residue ghost signal, as shown in FIG. 4B. The adding the pseudo ghost signal to the video signal on the input side causes sometimes a state in which the pseudo ghost signal to cancel the original ghost signal GR in FIG. 4C is added to the original video signal.

Therefore, the embodiment of the invention takes the following measures to prevent the ghost signal from remaining in the output video signal even when the above-mentioned defect occurs.

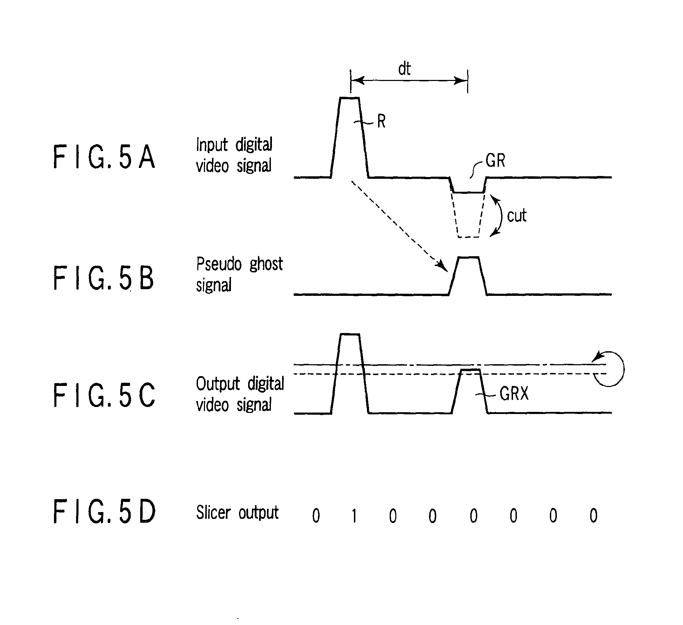

FIGS. 5A-5D are views showing to explain examples of characteristic operations of the invention. FIG. 5A shows the digital video signal to be input to the transversal filter 16. FIG. 5B shows the detected pseudo ghost signal and the gain control unit 19 sets the tap gain in the filter 16. As shown in FIG. 5C, as a result, it is supposed that a ghost signal GRX has newly occurred in an output from the filter 16.

In the slicing device, however, a threshold level control unit 22 controls a slice level of the slicer 17 to sets a slice level L1 to a slice level L2. As shown in FIG. 5D, the result shows that the influence of the ghost signal GRX on a slice output is restricted. In other words, the slicing device can obtain an output of which the ghost signal has surely been canceled. When the slice level L1 is varied to the slice level L2, its variable amounts may be determined depending on the level of the ghost signal.

As mentioned above, the slicing device determines whether the ghost signal has the positive polarity or negative polarity with use of the tap gain control information used in the filter 16 and controls the slicer 17 in order to increase the slice level when the ghost signal has the negative polarity.

The present invention is not limited to the above-described embodiment. Having used the tap gain information of the transversal filter so as to control the slice level of the slicer; however, a similar effect can be achieved by using the tap gain control information in order to control the slice level of the clamp circuit.

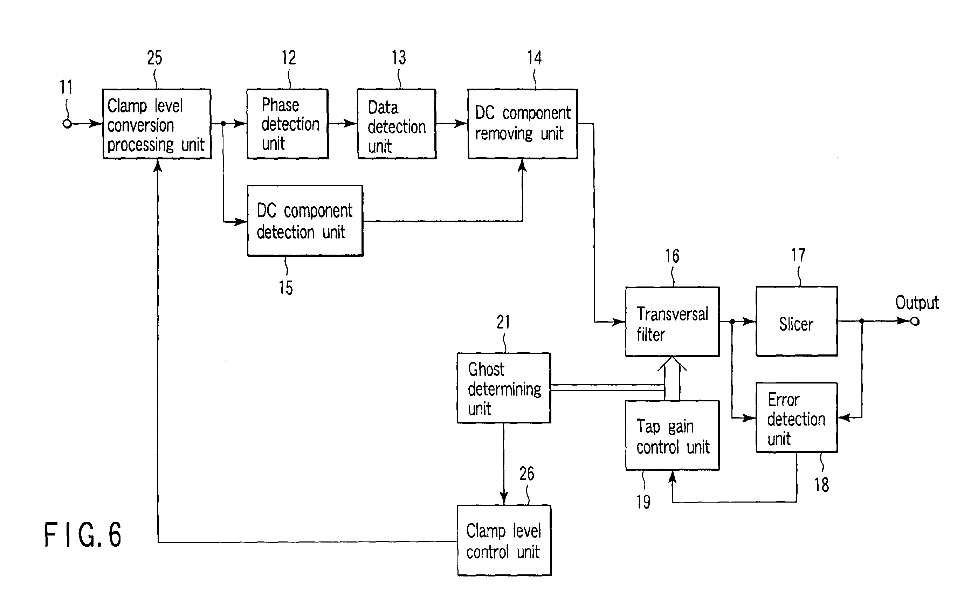

FIG. 6 shows another embodiment of the invention. Units differing from those of FIG. 1 will be described. A clamp level conversion processing unit 25 is provided between the input terminal 11 and the phase detection unit 12. In this case, the slicing device does not always determine a clamp level of an input digital video signal to a prescribed level but determines it on the basis of a control signal from a clamp level control unit 26. Level information on a ghost signal and polarity information on the ghost signal from the ghost determining unit 21 is input to the level control unit 26.

In this embodiment, the slicing device uses the tap gain control information used in the filter 16 to determine whether the ghost signal has a positive polarity or negative polarity, and when it has the negative polarity, controls so that the clamp level at the clamp level conversion processing unit 25 is decreased. In this case, the conversion processing unit 25 may vary the clamp level so as to be decreased in response to the level of the ghost signal.

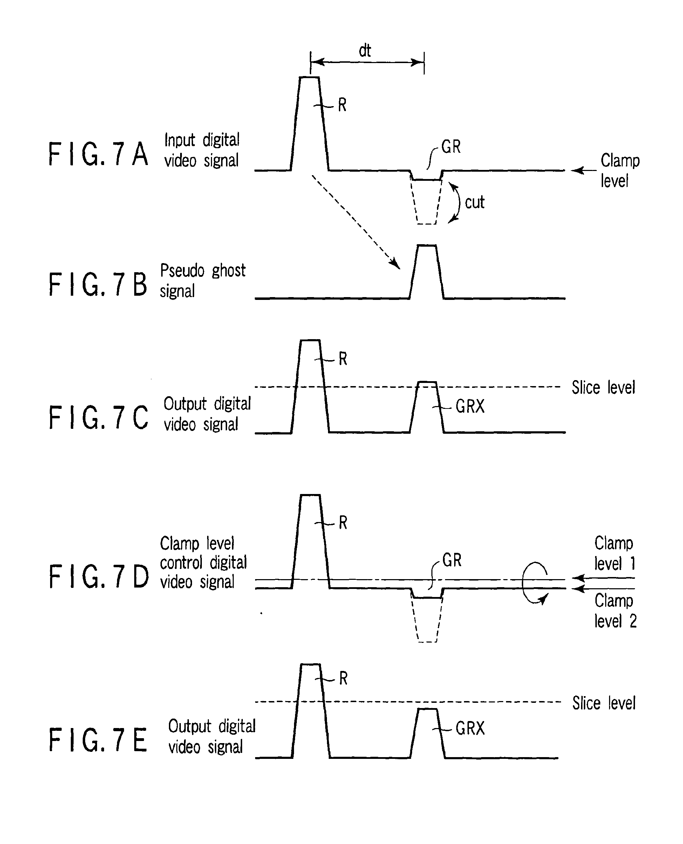

FIGS. 7A-7E show waveform charts for explaining the operations of the aforementioned embodiment. FIG. 7A shows the digital video signal to be input to the filter 16. FIG. 7B shows the detected pseudo ghost signal and the gain control unit 19 sets the tap gain in the filter 16, based on the pseudo ghost signal. As a result, as shown in FIG. 7C, it is presumed that the ghost signal GRX is newly generated in the output from the filter 16. In the slicing device then, as shown in FIG. 7D, the conversion processing unit 25 controls a clamp level 1 to a clamp level 2. That is, the clamp level is lowered. Then, the output form the filter 16 varies from a state shown in FIG. 7C to a state shown in FIG. 7E, and the ghost signal is restricted to be increased up to the slice level or more. In fact, the finally output digital video signal does not include any residual ghost signal.

The present invention is not limited to the aforementioned embodiments. The slicing device may be one in which the embodiment shown in FIG. 1 and the embodiment shown in FIG. 6 are integrally combined. This combined embodiment can effectively eliminate residual ghost signal even if variable amounts of the slice level and those of the clamp level are small.

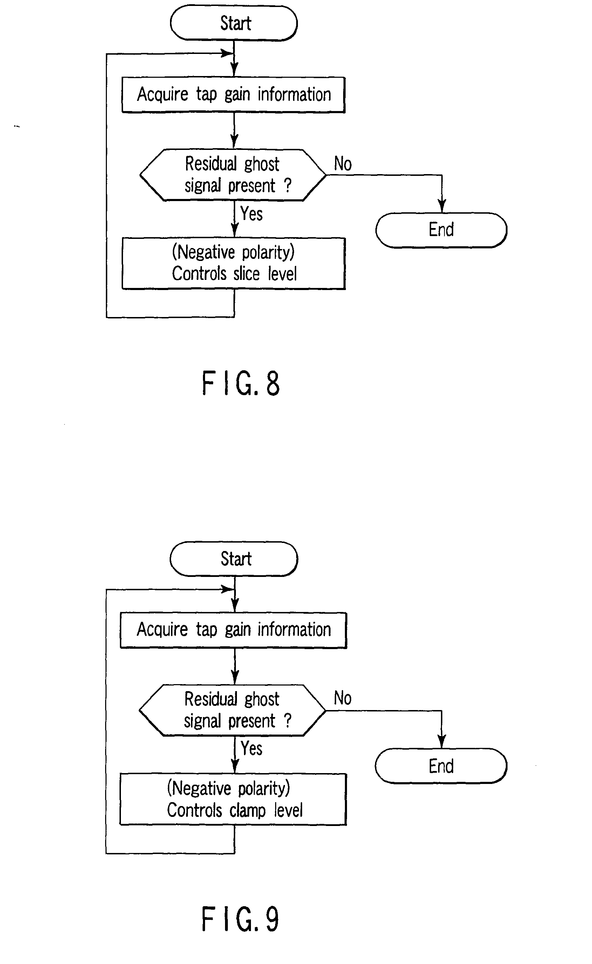

FIG. 8 is the exemplary flowchart showing the operation of the embodiment shown in FIG. 1. FIG. 9 is the exemplary flowchart showing the operation of the embodiment shown in FIG. 6. FIG. 8 and FIG. 9 are different from each other in regard to the points of controlling the slice level and controlling the clamp level.

It is to be understood that the invention is not limited to the specific embodiments there of, the slicing device may be configured to integrate the threshold level control circuits 22 and 26 in FIG. 1 and FIG. 6 with each other. The clamp level conversion processing unit 25 may be disposed in the preceding stage of the phase detection unit 12 in FIG. 1: the preceding stage of the transversal filter 16. In the case of such a configuration, the slicing device can control both slice level and clamp level together. In this case, the control amounts of the slice level and the clamp level may be smaller.

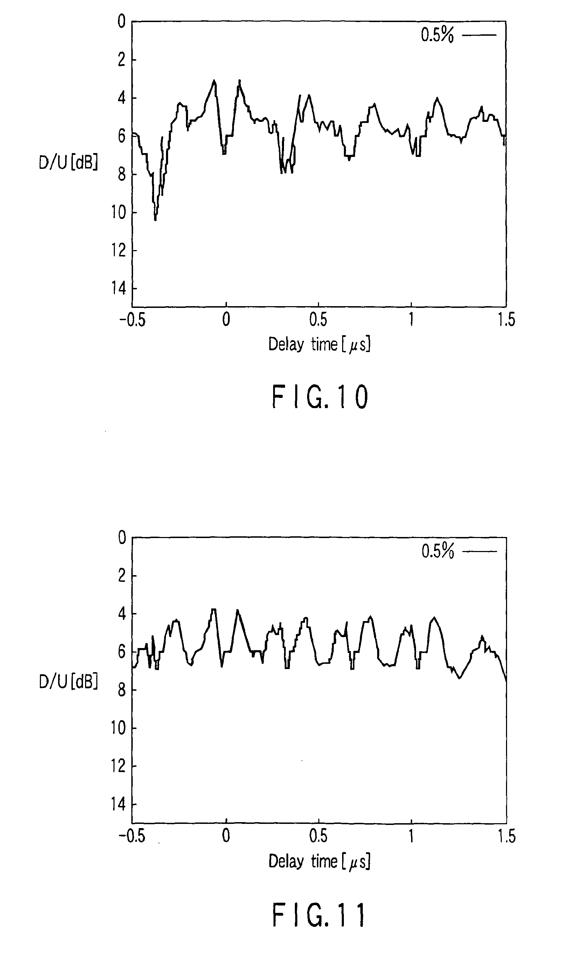

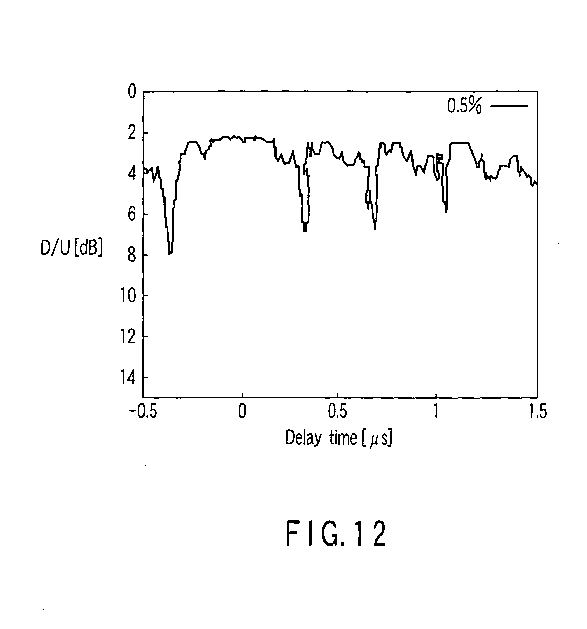

FIGS. 10 to 12 each show explanatory views of aspects with the output video signals improved therein. Vertical axes indicate level of the ghost signals and horizontal axes indicate delay time, respectively, and they show ranges in which bit error rates not more than 0.5% desired in the character multiplexed broadcast are achieved in the environment mentioned above. FIG. 10 shows an aspect in which the influence caused by the ghost signal of negative polarity appears in the output video signal from the filter 16. In FIG. 10, unnecessary influence is periodically affected on a position with a time advanced and a position with a time delayed from a signal with a delay time of zero as a reference time point. FIG. 11 shows an aspect of the output video signal from the slicer 17 in processing in the method by the embodiment shown in FIG. 1. With the slice level controlled around a level of 6 dB, the FIG. 11 shows the aspect in which adverse effects caused by ghosts are suppressed around the level of 6 dB that is a pedestal. FIG. 12 shows an aspect of the output video signal in adjusting the clamp level by the embodiment shown in FIG. 6. The adverse effects are suppressed in whole and ghost signals which have occurred unnecessarily are suppressed. If the slice level is around 3 dB, the slicing device can obtain the almost same output as in the case shown in FIG. 11.

## Claims

1. A slicing device for extracting multiplexed data, **characterized by** comprising:
a transversal filter (16) to which a digital video signal digitized so that the digital video signal with higher luminance becomes higher in level is input;
a slicing circuit (17) to which the digital video signal after being ghost-cancelled by the transversal filter is input;
a ghost determining unit (21) which determines whether a ghost signal has a positive polarity or a negative polarity by using tap gain control information used in the transversal filter; and
a threshold control unit (22) which controls the slicing circuit so as to increase a slice level when the ghost signal has the negative polarity.

2. The slicing device for extracting the multiplexed data according to claim 1, **characterized in that** the threshold controlling unit (22) controls the slice level in response to amplitude of the ghost signal having the negative polarity.

3. The slicing device for extracting the multiplexed data according to claim 1, **characterized by** further comprising:
a clamp level control unit (26) which determines a clamp level of the digital video signal; and
a clamp level conversion processing unit (25) provided at a preceding stage of the transversal filter, wherein
the clamp level control unit controls the clamp level conversion processing unit so as to decrease the clamp level thereat.

4. A slicing device for extracting multiplexed data, **characterized by** comprising:
a clamp level conversion processing unit (25) to which a digital video signal digitized so that a digital video signal with higher luminance becomes higher in level is input;
a transversal filter (16) to which a digital video signal digitized of which the clamp level is set by the clamp level conversion processing unit;
a slicing circuit (17) to which the digital video signal after being ghost-cancelled by the transversal filter is input;
a ghost determining unit (21) which determines whether a ghost signal has a positive polarity or a negative polarity by using tap gain control information used in the transversal filter; and
a clamp level control unit (26) which controls the clamp level conversion processing unit so as to decrease the clamp level thereat.

5. The slicing device for extracting the multiplexed data according to claim 3, **characterized in that** the threshold control unit (22) controls the clamp level in response to amplitude of the ghost signal having the negative polarity.

6. A slicing method for extracting multiplexed data in an equalizing device, including a clamp level conversion processing unit to which a digital video signal digitized so that the digital video signal with higher luminance becomes higher in level is input; a transversal filter to which the digital video signal of which the clamp level is set by the clamp level conversion processing unit is input; a slicing circuit to which the digital video signal after being ghost-cancelled by the transversal filter is input; and a control unit, the method **characterized by** comprising:
determining whether the ghost signal has a positive polarity or a negative polarity by using tap gain control information used in the transversal filter; and
controlling the slicing circuit so as to relatively increase a slice level thereof when the ghost signal has the negative polarity.

7. The slicing method for extracting the multiplexed data according to claim 6, **characterized in that** the controlling the slicing circuit so as to relatively increase the slice level thereof controls the slicing circuit so as to increase the slice level thereof.

8. The slicing method for the extracting multiplied data according to claim 6, **characterized in that** the controlling the slicing circuit so as to relatively increase the slice level thereof controls the slicing circuit so as to decrease the clamp level at the clamp level conversion processing unit.

9. The slicing method for extracting the multiplexed data according to claim 7, **characterized in that** an amount of increasing the slice level is set in response to amplitude of the ghost signal having the negative polarity.

10. The slicing method for extracting the multiplexed data according to claim 8, **characterized in that** an amount of decreasing the clamp level is set in response to amplitude of the ghost signal having the negative polarity.
